# EUROPÄISCHE PATENTANMELDUNG

(11) **EP 4 142 321 A1**
(43) Veröffentlichungstag der Anmeldung: **01.03.2023**
(21) Anmeldenummer: 22171612.9
(22) Anmeldetag: 04.05.2022
(51) Int. Cl.: H04W 8/22, H04W 12/106, H04L 43/0817

(54) **VERFAHREN ZUM BETRIEB EINES AUTOMATISIERUNGSSYSTEMS MIT MINDESTENS EINEM ÜBERWACHUNGSMODUL UND ATTESTIERUNGSEINRICHTUNG**

(30) Priorität: 31.08.2021 DE 102021209579
(71) Anmelder: Siemens Aktiengesellschaft, 80333 München (DE)
(72) Erfinder: Falk, Rainer, 85586 Poing (DE)

(57) **Zusammenfassung**

Bei dem Verfahren zum Betrieb eines Automatisierungssystems mit mindestens einem Überwachungsmodul ist das Überwachungsmodul jeweils ausgebildet, zur Überwachung einer Betriebszuverlässigkeit eines Teils des Automatisierungssystems fortlaufend ein Betriebszuverlässigkeitssignal des Teils des Automatisierungssystems zu erfassen und im Falle eines Ausbleibens des Betriebszuverlässigkeitssignals eine Beeinträchtigung der Betriebszuverlässigkeit festzustellen. Bei dem Verfahren wird ein Zustand der Erfassung des Betriebszuverlässigkeitssignals des mindestens einen Überwachungsmoduls kryptographisch geschützt attestiert.

## Beschreibung

Die Erfindung betrifft ein Verfahren zum Betrieb eines Automatisierungssystems mit mindestens einem Überwachungsmodul zur Überwachung einer Betriebszuverlässigkeit sowie eine Attestierungseinrichtung.

Für industrielle Steuergeräten und eingebettete Systeme werden regelmäßig sogenannte Watchdogs eingesetzt. Solche Watchdogs sind Überwachungsmodule, welche eine Betriebszuverlässigkeit einer Komponente oder eines Systems, etwa der industriellen Steuergeräte oder der eingebetteten Systeme, überwachen. Dazu erfassen die Überwachungsmodule fortlaufend, d. h. ununterbrochen oder wiederholt, ein Betriebszuverlässigkeitssignal. Ein Ausbleiben eines solchen Betriebszuverlässigkeitssignals deutet auf eine Fehlfunktion der überwachten Komponente hin. Die Überwachungsmodule sind daher meist ausgebildet, bei einem Ausbleiben eines Betriebszuverlässigkeitssignals die Komponente oder das System in einen sicheren Zustand zu versetzen, also vorzugsweise herunterzufahren, sicher abzuschalten, einen sicheren Betriebsmodus wie insbesondere einen Fail-Safe-Betriebsmodus herbeizuführen oder einen Neustart der Komponente oder des Systems herbeizuführen.

In offenen, flexibel anpassbaren industriellen Automatisierungs-Umgebungen müssen solche Überwachungsmodule ebenso flexibel nutzbar und anpassbar sein. Dies betrifft insbesondere solche Anwendungsfälle, in welchen Steuergeräte virtualisiert und computerimplementiert realisiert werden, sodass die Funktionalität der Steuergeräte auf einer Standard-Computer-Plattform ausgeführt wird, etwa als virtuelle Maschine, als Container oder als Softwareprozess.

Es besteht folglich ein Bedarf an einem verlässlichen Betrieb von offenen, virtualisierten Automatisierungssystemen, welche Überwachungsmodulen aufweisen.

Es ist daher Aufgabe der Erfindung, ein verbessertes Verfahren zum Betrieb eines Automatisierungssystems mit mindestens einem Überwachungsmodul anzugeben. Insbesondere soll das Verfahren die Betriebssicherheit von Automatisierungssystemen erhöhen, vorzugsweise von offenen und virtualisierten Automatisierungssystemen. Ferner ist es Aufgabe der Erfindung, eine Attestierungseinrichtung anzugeben, mit welcher das verbesserte Verfahren durchgeführt werden kann.

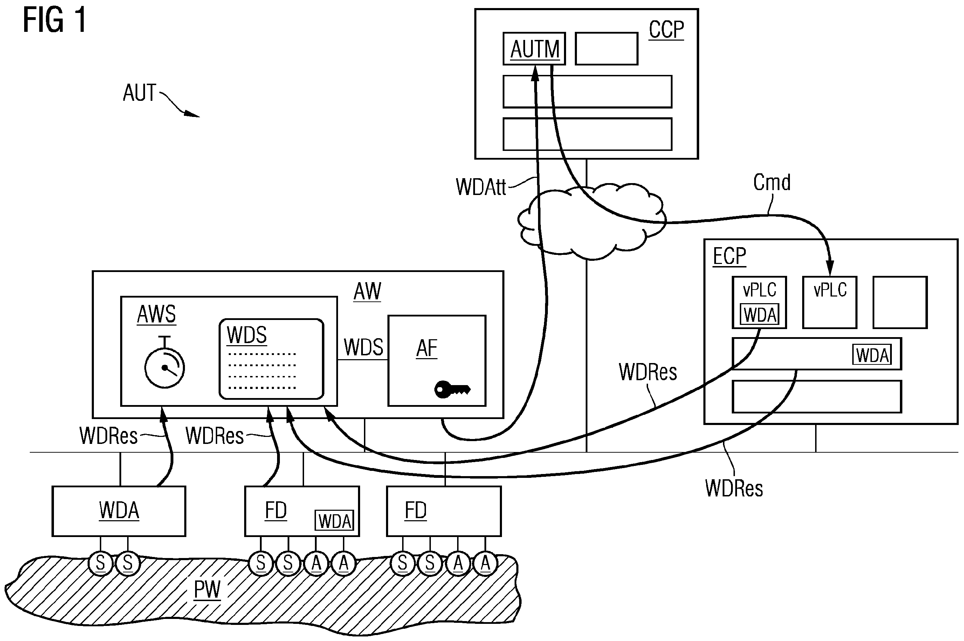

Diese Aufgabe der Erfindung wird mit einem Verfahren zum Betrieb eines Automatisierungssystems mit den in Anspruch 1 angegebenen Merkmalen sowie mit einer Attestierungseinrichtung mit den in Anspruch 9 angegebenen Merkmalen gelöst. Bevorzugte Weiterbildungen der Erfindung sind in den zugehörigen Unteransprüchen, der nachfolgenden Beschreibung und der Zeichnung angegeben.

Das erfindungsgemäße Verfahren dient zum Betrieb eines Automatisierungssystems mit mindestens einem Überwachungsmodul, also zum Betrieb eines Automatisierungssystems, das mindestens ein Überwachungsmodul aufweist. Dabei ist das Überwachungsmodul jeweils ausgebildet, zur Überwachung einer Betriebszuverlässigkeit je eines Teils des Automatisierungssystems fortlaufend ein Betriebszuverlässigkeitssignal des Teils des Automatisierungssystems zu erfassen und im Falle eines Ausbleibens des Betriebszuverlässigkeitssignals eine Beeinträchtigung der Betriebszuverlässigkeit festzustellen. Bei dem erfindungsgemäßen Verfahren wird ein Zustand der Erfassung des Betriebszuverlässigkeitssignals des mindestens einen Überwachungsmoduls kryptographisch geschützt attestiert. Vorzugsweise wird dabei der Zustand der Erfassung des Betriebszuverlässigkeitssignals nicht durch das mindestens eine Überwachungsmodul selbst attestiert.

Unter einem Betriebszuverlässigkeitssignal ist im Rahmen der vorliegenden Erfindung ein Signal zu verstehen, welches einen zuverlässigen Betriebszustand des Teils des Automatisierungssystems angibt, insbesondere eine Positivbestätigung eines die Betriebszuverlässigkeit dieses Teils des Automatisierungssystems überwachenden Watchdogs.

Mit dem erfindungsgemäßen Verfahren kann der aktuelle Zustand des mindestens einen Überwachungsmoduls auch auf einem externen System infolge der kryptographischen Attestierung verlässlich ausgewertet werden. Dadurch können bei einer festgestellten Beeinträchtigung der Betriebszuverlässigkeit des Teils des Automatisierungssystems einzuleitende Maßnahmen auf anderen Teilen des Automatisierungssystems eingeleitet werden als jenem, auf dem das mindestens eine Überwachungsmodul realisiert oder implementiert ist. Es ist nicht wie bei herkömmlichen Überwachungsmodulen erforderlich, dass das Überwachungsmodul selbst über direkte, lokale elektrische Signale einen Reboot des von ihm überwachten Teils des Automatisierungssystems anstoßen können muss. Daher kann das erfindungsgemäße Verfahren vorteilhaft in offenen, verteilten und insbesondere softwarebasierten und/oder virtualisierten Automatisierungssystemen angewandt werden. Zweckmäßig können von Überwachungsmodulen überwachte Teile des Automatisierungssystems virtualisierte PLCs auf Industrial Edge oder 5G-basierten Computing Plattformen sein. Idealerweise wird das erfindungsgemäße Verfahren nicht von dem mindestens einen Überwachungsmodul selbst ausgeführt.

Bei dem erfindungsgemäßen Verfahren wird der Zustand der Erfassung des mindestens einen Überwachungsmoduls zweckmäßig derart kryptographisch attestiert, dass der Zustand der Erfassung in einer Datenstruktur dokumentiert wird und die Datenstruktur kryptographisch geschützt wird. Zweckmäßig wird die Datenstruktur kryptographisch geschützt, indem die Datenstruktur digital signiert wird und/oder verschlüsselt wird und/oder ein Prüfwert, insbesondere ein Hashwert, der Datenstruktur geschützt hinterlegt wird. Besonders vorteilhaft kann eine kryptographisch geschützte Datenstruktur wie insbesondere ASN.1 und/oder XML-Encryption/XML-Signature und/oder JSON Web Encryption JWE und/oder Verifiable Credential herangezogen werden.

Das erfindungsgemäße Verfahren lässt sich vorteilhaft mit einer Hardwarekomponente oder ebenfalls vorteilhaft mit einem Computerprogrammprodukt durchführen. So kann das erfindungsgemäße Verfahren vorteilhaft mit einer Firmware ausgeführt werden, die innerhalb einer vertrauenswürdigen Ausführungsumgebung, etwa einem *"Trusted Execution Environmen"* (TEE), realisiert ist. Das Computerprogrammprodukt kann zweckmäßig als Software, insbesondere als virtuelle Maschine oder als Container oder als App, realisiert sein, die vorzugsweise in einer Cloud- oder Edge-Ausführungsumgebung ausgeführt wird.

Vorzugsweise ist bei dem erfindungsgemäßen Verfahren das mindestens eine Überwachungsmodul ausgebildet, im Falle, dass eine Beeinträchtigung der Betriebszuverlässigkeit festgestellt wird, den Teil in einen sicheren Betriebszustand zu versetzen. Zweckmäßig bildet bei dem erfindungsgemäßen Verfahren das mindestens eine Überwachungsmodul einen Watchdog.

Bevorzugt gibt bei dem Verfahren gemäß der Erfindung der Zustand der Erfassung des Betriebszuverlässigkeitssignals an, ob das Betriebszuverlässigkeitssignal ausbleibt. Somit wird zumindest ein solcher Zustand der Erfassung kryptographisch attestiert, der einen unzuverlässigen Betriebszustand angibt oder zumindest potenziell angibt. Mittels des erfindungsgemäßen Verfahrens können vorteilhaft Maßnahmen ergriffen werden, um die Zuverlässigkeit des Betriebs wieder herzustellen oder zumindest den betreffenden Teil des Automatisierungssystems in einen sicheren Betriebszustand zu versetzen. Besonders bevorzugt werden bei dem erfindungsgemäßen Verfahren diese Maßnahmen ergriffen, wenn das Betriebszuverlässigkeitssignal ausbleibt.

In einer vorteilhaften Weiterbildung des erfindungsgemäßen Verfahrens gibt der Zustand der Erfassung des Betriebszuverlässigkeitssignals an, seit welchem Zeitpunkt das Betriebszuverlässigkeitssignal ausbleibt oder zu welchem Zeitpunkt das letzte Betriebszuverlässigkeitssignal erfasst worden ist oder ob eine Beeinträchtigung der Betriebszuverlässigkeit festgestellt ist. Anhand der detaillierten Information über den Zustand der Erfassung kann bei dem erfindungsgemäßen Verfahren eine Plausibilitätsprüfung des Zustands der Erfassung erfolgen, bevor er kryptographisch geschützt attestiert wird.

Bei dem erfindungsgemäßen Verfahren wird bevorzugt mit einem solchen Teil des Automatisierungssystems kryptographisch gesichert attestiert, dessen Betriebszuverlässigkeit nicht von dem mindestens einen Überwachungsmodul überwacht wird.

In einer bevorzugten Weiterbildung des Verfahrens gemäß der Erfindung erfolgt der Betrieb eines solchen Automatisierungssystems, welches zwei oder mehrere Überwachungsmodule aufweist, wobei jeweils ein Zustand der Erfassung des Betriebszuverlässigkeitssignals der zwei oder mehreren Überwachungsmodule kryptographisch geschützt attestiert wird. Auf diese Weise können bei dem erfindungsgemäßen Verfahren die Zustände mehrerer Überwachungsmodule gemeinsam berücksichtigt werden.

Besonders bevorzugt wird bei dem erfindungsgemäßen Verfahren ermittelt, ob eine Beeinträchtigung der Betriebszuverlässigkeit von allen Überwachungsmodulen oder von einer Mindestanzahl der Überwachungsmodule oder von einem Mindestanteil der Überwachungsmodule festgestellt wird.

In dieser Weiterbildung des erfindungsgemäßen Verfahrens kann geprüft werden, ob die Zustände der Erfassung von Betriebszuverlässigkeitssignalen eines Überwachungsmoduls mit den Zuständen anderer Überwachungsmodule übereinstimmen. Insbesondere kann mittels des erfindungsgemäßen Verfahrens eine Attestierung eines Zustands der Erfassung eines Betriebszuverlässigkeitssignals dann erfolgen, wenn die Zustände innerhalb eines Zeitfensters von mehreren Überwachungsmodulen übereinstimmen, vorzugsweise wenn die Zustände von einer Mindestanzahl von Überwachungsmodulen oder einem Mindestanteil von Überwachungsmodulen oder sämtlichen Überwachungsmodulen miteinander übereinstimmen. Vorzugweise ist unter einem Zustand ein solcher Zustand zu verstehen, welcher eine Beeinträchtigung der Betriebszuverlässigkeit angibt oder nicht.

Bei dem Verfahren gemäß der Erfindung umfasst der Zustand der Erfassung des Betriebszuverlässigkeitssignals des mindestens einen Überwachungsmoduls vorzugsweise jeweils zumindest eine Identifizierungsinformation des mindestens einen Überwachungsmoduls. Auf diese Weise kann eine Zuverlässigkeit des Zustands abhängig von der Identifizierungsinformation beurteilt werden.

Bevorzugt wird bei dem erfindungsgemäßen Verfahren abhängig vom kryptographisch geschützt attestierten Zustand der Teil des Automatisierungssystems, dessen Betriebszuverlässigkeit mit dem mindestens einen Überwachungsmodul überwacht wird, in einen sicheren Betriebszustand versetzt oder heruntergefahren oder neugestartet.

Das erfindungsgemäße Attestierungsmodul ist ausgebildet zur Attestierung eines Zustands eines oder mehrerer Überwachungsmodule, die ihrerseits ausgebildet sind, zur Überwachung einer Betriebszuverlässigkeit eines Teils eines Automatisierungssystems fortlaufend ein Betriebszuverlässigkeitssignal des Teils des Automatisierungssystems zu erfassen und im Falle eines Ausbleibens des Betriebszuverlässigkeitssignals eine Beeinträchtigung der Betriebszuverlässigkeit festzustellen. Das erfindungsgemäße Attestierungsmodul ist ausgebildet, einen Zustand der Erfassung des Betriebszuverlässigkeitssignals des mindestens einen Überwachungsmoduls kryptographisch geschützt zu attestieren.

Bevorzugt ist das erfindungsgemäße Attestierungsmodul nicht mit einem solchen Teil des Automatisierungssystems implementiert, dessen Betriebszuverlässigkeit mit einem der Überwachungsmodule überwacht wird. Auf diese Weise kann eine mangelnde Zuverlässigkeit des Teils, auf welchem das Überwachungsmodul implementiert ist, sich nicht auf das erfindungsgemäße Attestierungsmodul auswirken.

Vorzugsweise ist das erfindungsgemäße Attestierungsmodul ausgebildet, Verfahrensschritte der zuvor beschriebenen Weiterbildungen des erfindungsgemäßen Verfahrens auszuführen.

Nachfolgend wird die Erfindung anhand eines in der Zeichnung dargestellten Ausführungsbeispiels näher erläutert. Die einzige Zeichnungsfigur 1 zeigt ein Automatisierungssystem mit einer erfindungsgemäßen Attestierungseinrichtung und mehreren Überwachungsmodulen bei der Durchführung eines Ausführungsbeispiels des erfindungsgemäßen Verfahrens schematisch in einer Prinzipskizze.

Zeichnungsfigur 1 zeigt einen Betrieb eines verteilten und teilweise virtualisierten industriellen Automatisierungssystems AUT in Gestalt eines cyber-physischen Systems (engl. "cyber physical system"), welches im dargestellten Ausführungsbeispiel zugleich ein Internet-der-Dinge-System bildet.

Zum Betrieb des Automatisierungssystems AUT werden mehrere Überwachungsmodule WDA genutzt, welche jeweils eine Zuverlässigkeit eines Betriebs einer Komponente des Automatisierungssystems AUT überwachen. Dazu erfassen die Überwachungsmodule WDA jeweils fortdauernd eine Betriebszuverlässigkeitsinformation in Form von Positivbestätigungen WDRes.

Die Überwachungsmodule WDA sind im gezeigten Ausführungsbeispiel zur Überwachung eines Feldgeräts FD des Automatisierungssystems AUT sowie zur Überwachung der Betriebssicherheit einer Umgebungsbedingung der physikalischen Umgebung PW, etwa einer Temperaturbedingung, sowie zur Überwachung einer speicherprogrammierbaren Steuerung vPLC einer Edge-Computing-Plattform ECP sowie einer weiteren Komponente der Edge-Computing-Plattform ECP eingerichtet.

Beim Ausbleiben der Positivbestätigung WDRes geben die Überwachungsmodule WDA ein Alarmsignal. Die Überwachungsmodule sind in an sich bekannter Weise als Watchdogs realisiert. Die Watchdogs erfassen fortdauernd Positivbestätigungen der Komponenten, deren Betriebszuverlässigkeit sie überwachen. Die Überwachungsmodule WDA sind im gezeigten Ausführungsbeispiel logische Überwachungsmodule WDA, d. h. die Überwachungsmodule WDA bilden Apps oder Computerprogramme auf den jeweiligen Komponenten, etwa dem Feldgerät FD, der Edge-Computing-Plattform ECP oder sonstigen Teilen des Automatisierungssystems AUT.

Bei einem Auftreten eines solchen Alarmsignals eines Überwachungsmoduls WDA ist die jeweilige Komponente FD oder vPLC oder das gesamte Automatisierungssystem AUT in einen sicheren Betriebsmodus zu bringen. Alternativ kann das Automatisierungssystem AUT neu gestartet werden oder sicher heruntergefahren werden.

Zur Beurteilung einer Zuverlässigkeit der Überwachungsmodule WDA weist das Automatisierungssystem AUT eine Attestierungseinrichtung AW auf. Die Attestierungseinrichtung AW erfasst Positivbestätigungen WDRes der Überwachungsmodule WDA. Die Attestierungseinrichtung prüft, ob die jeweiligen Positivbestätigungen WDRes der Überwachungsmodule WDA jeweils hinreichend gültig sind, d. h. nicht länger zurückliegen als eine vorgegebene Höchstdauer. Unterschiedliche Überwachungsmodule WDA weisen dabei eine jeweils eigene Höchstdauer auf.

Die Attestierungseinrichtung AW trägt die erfassten Positivbestätigungen WDRes jedes Überwachungsmoduls WDA in eine Zustandsliste in einem Zustandsspeicher WDS ein und signiert diese Zustandsliste digital mittels eines Attestierungsschlüssels AF. Die digital signierte Zustandsliste bildet eine kryptographische Attestierung WDAtt des Zustands der Erfassung der Betriebszuverlässigkeit durch die Überwachungsmodule WDA. Die Attestierungseinrichtung AW kann die Zustandsliste vor dem Signieren vorverarbeiten, beispielsweise filtern oder anonymisieren oder pseudonymisieren.

Die Attestierung WDAtt der Attestierungseinrichtung AW kann beispielsweise zudem eine Aktualitätsinformation aufweisen, etwa einen Zeitstempel oder einen Nonce-Wert oder einen Challenge-Wert. Zudem kann die Attestierung WDAtt eine Information zu dem Gerät oder der Ausführungsumgebung aufweisen, auf dem oder der die Attestierungseinrichtung AW realisiert ist. Im gezeigten Ausführungsbeispiel ist die Attestierungseinrichtung AW als logische Attestierungseinrichtung AW auf Rechnerressourcen des Automatisierungsnetzwerks AUT realisiert.

Andere Rechnerressourcen des Automatisierungsnetzwerks AW als jene, auf welchem die Attestierungseinrichtung AW realisiert ist, können abhängig von der kryptographisch geschützten Attestierung WDAtt eine Aktion durchführen oder anstoßen. Im dargestellten Fall stößt eine Monitoring-App AUTM des Automatisierungssystems AUT in einem Cloud-Backend CCP eine Aktion auf einer speicherprogrammierbaren Steuerung vPLC der Edge-Computing-Plattform ECP an. Zudem wird das Automatisierungssystem AUT mittels der Monitoring-App AUTM in einen sicheren Betriebszustand versetzt.

## Patentansprüche

1. Verfahren zum Betrieb eines Automatisierungssystems (AUT) mit mindestens einem Überwachungsmodul (WDA), wobei das Überwachungsmodul (WDA) jeweils ausgebildet ist, zur Überwachung einer Betriebszuverlässigkeit eines Teils des Automatisierungssystems (AUT) fortlaufend ein Betriebszuverlässigkeitssignal (WDRes) des Teils des Automatisierungssystems (AUT) zu erfassen und im Falle eines Ausbleibens des Betriebszuverlässigkeitssignals (WDRes) eine Beeinträchtigung der Betriebszuverlässigkeit festzustellen, wobei bei dem Verfahren ein Zustand (WDS) der Erfassung des Betriebszuverlässigkeitssignals des mindestens einen Überwachungsmoduls (WDA) kryptographisch geschützt attestiert (WDAtt) wird.

2. Verfahren nach dem vorhergehenden Anspruch, bei welchem das mindestens eine Überwachungsmodul (WDA) ausgebildet ist, im Falle, dass eine Beeinträchtigung der Betriebszuverlässigkeit festgestellt wird, den Teil in einen sicheren Betriebszustand zu versetzen.

3. Verfahren nach einem der vorhergehenden Ansprüche, bei welchem der Zustand der Erfassung des Betriebszuverlässigkeitssignals angibt, ob das Betriebszuverlässigkeitssignal (WDRes) ausbleibt.

4. Verfahren nach dem vorhergehenden Anspruch, bei welchem der Zustand der Erfassung es Betriebszuverlässigkeitssignals angibt, seit welchem Zeitpunkt das Betriebszuverlässigkeitssignal (WDRes) ausbleibt oder zu welchem Zeitpunkt das letzte Betriebszuverlässigkeitssignal (WDRes) erfasst worden ist oder ob eine Beeinträchtigung der Betriebszuverlässigkeit festgestellt ist.

5. Verfahren nach einem der vorhergehenden Ansprüche, bei welchem mit einem Teil des Automatisierungssystems (AUT) kryptographisch gesichert attestiert wird, dessen Betriebszuverlässigkeit nicht von dem mindestens einen Überwachungsmodul überwacht wird und wobei das Verfahren nicht von dem Überwachungsmodul ausgeführt wird.

6. Verfahren nach einem der vorhergehenden Ansprüche, bei welchem der Betrieb eines Automatisierungssystems (AUT) mit zwei oder mehreren Überwachungsmodulen (WDA) erfolgt, wobei jeweils ein Zustand der Erfassung des Betriebszuverlässigkeitssignals (WDRes) der zwei oder mehreren Überwachungsmodule (WDA) kryptographisch geschützt attestiert wird.

7. Verfahren nach einem der vorhergehenden Ansprüche, bei welchem ermittelt wird, ob eine Beeinträchtigung der Betriebszuverlässigkeit von allen Überwachungsmodulen (WDA) oder von einer Mindestanzahl der Überwachungsmodule (WDA) oder von einem Mindestanteil der Überwachungsmodule (WDA) festgestellt wird.

8. Verfahren nach einem der vorhergehenden Ansprüche, bei welchem Zustand der Erfassung des Betriebszuverlässigkeitssignals des mindestens einen Überwachungsmoduls (WDA) jeweils zumindest eine Identifizierungsinformation des mindestens einen Überwachungsmoduls (WDA) umfasst.

9. Attestierungsmodul, ausgebildet zur Attestierung eines Zustands eines oder mehrerer Überwachungsmodule (WDA), die ausgebildet sind, zur Überwachung einer Betriebszuverlässigkeit eines Teils des Automatisierungssystems (WDA) fortlaufend ein Betriebszuverlässigkeitssignal (WDRes) des Teils eines Automatisierungssystems (WDA) zu erfassen und im Falle eines Ausbleibens des Betriebszuverlässigkeitssignals (WDRes) eine Beeinträchtigung der Betriebszuverlässigkeit festzustellen, wobei das Attestierungsmodul (AW) ausgebildet ist, ein Zustand der Erfassung des Betriebszuverlässigkeitssignals (WDRes) des mindestens einen Überwachungsmoduls (WDA) kryptographisch geschützt zu attestieren.

10. Attestierungsmodul nach dem vorhergehenden Anspruch, welches nicht mit einem Teil des Automatisierungssystems implementiert ist, dessen Betriebszuverlässigkeit mit einem der Überwachungsmodule (WDA) überwacht wird und/oder welches ausgebildet ist, Verfahrensschritte nach einem der Ansprüche 2 bis 8 auszuführen.
